# EUROPEAN PATENT SPECIFICATION

(11) **EP 2 911 341 B1**
(45) Date of publication and mention of the grant of the patent: **08.02.2017**
(21) Application number: 13847852.4
(22) Date of filing: 17.09.2013
(51) Int. Cl.: H04L 12/24, H04L 12/703, H04L 12/709, H04L 12/891

(54) **METHOD AND DEVICE FOR DYNAMICALLY SWITCHING GATEWAY OF DISTRIBUTED RESILIENT NETWORK INTERCONNECT**
VERFAHREN UND VORRICHTUNG ZUR DYNAMISCHEN GATEWAY-UMSCHALTUNG EINER VERTEILTEN ROBUSTEN NETZWERKVERBINDUNG
PROCÉDÉ ET DISPOSITIF DE COMMUTATION DYNAMIQUE D'UNE PASSERELLE D'INTERCONNEXION DE RÉSEAU DISTRIBUÉ RÉSILIENT (DRNI)

(30) Priority: 18.10.2012 CN 201210398054
(43) Date of publication of application: 26.08.2015
(73) Proprietor: ZTE Corporation, Shenzhen, Guangdong 518057 (CN)
(72) Inventor: XU, Xueqiong, Shenzhen Guangdong 518057 (CN); YU, Jinghai, Shenzhen Guangdong 518057 (CN); GUO, Zhui, Shenzhen Guangdong 518057 (CN)
(74) Representative: Modiano, Micaela Nadia
(86) International application number: PCT/CN2013/083628
(87) International publication number: WO 2014/059844

(56) References cited:
- WO-A1-2011/003457
- CN-A- 102 265 555
- BOCCI M ET AL: "Network high availability for ethernet services using IP/MPLS networks", IEEE COMMUNICATIONS MAGAZINE, IEEE SERVICE CENTER, PISCATAWAY, US, vol. 45, no. 3, 1 March 2008 (2008-03-01), pages 90-96, XP011205402, ISSN: 0163-6804
- INTERWORKING TASK GROUP OF IEEE 802 1: "Draft Standard for Local and Metropolitan Area Networks - Link Agregation ; 802-1AX-REV-", IEEE DRAFT; 802-1AX-REV-D0-4, IEEE-SA, PISCATAWAY, NJ USA, vol. 802.1, no. d0-4, 5 October 2012 (2012-10-05), pages 1-188, XP068005850, [retrieved on 2012-10-05]

## Description

### Technical Field

The present invention relates to the network communication protection technology, and in particular, to a method and apparatus for dynamically switching a gateway in distributed resilient network interconnect (DRNI).

### Background of the Related Art

With the development at full speed of the broadband service, the interconnection among the networks is used more and more, to bear more services. According to the adopted technology, there can be many kinds of methods to realize protecting the links and the nodes thereon inside the network. As the protection demand to the flowrate being stronger and stronger and the requirement being higher and higher, some operators put forward the demand of requiring to protect the network interconnection area as well. The protection can be realized by adopting the port aggregation or loop mode. The loop network protection technology is limited by the network topology, and it is not applicable to adopting the whole network connection mode for the network interconnection part. In the current standard 802.1AX of the Institute of Electrical and Electronics Engineers (IEEE), the link aggregation can realize the protection of multiple links, but only limited to the link aggregation supporting the single node, which cannot satisfy the demand of the node protection.

In order to be suitable for the networking mode of the network and the network interconnection area being more diversified and be able to realize the protection of the link and the edge node, the IEEE standard organization proposes the DRNI technology, to support the link aggregation of the multiple nodes. In the DRNI technology, one or more portal systems constitute one logical end point to perform the link aggregation, and the multiple links of the multiple portal systems are aggregated into one distributed Link Aggregation Group (LAG), thus guaranteeing the double protection of the link and node in the network interconnection area.

At present, the DRNI adopts the distribution mode according to the service message, and appoints one portal system in which the gateway is located for each service. When the service of the present network will be sent to the opposite-end network, or the service of the opposite-end network will enter the present network, they will all need to be filtered through the gateway first, and only the service message which is not abandoned by the gateway will be forwarded. However, the standard does not define the problem how to guarantee realizing the service retransmission through redistributing the service gateway when the portal system in which the gateway is located breaks down or is removed.

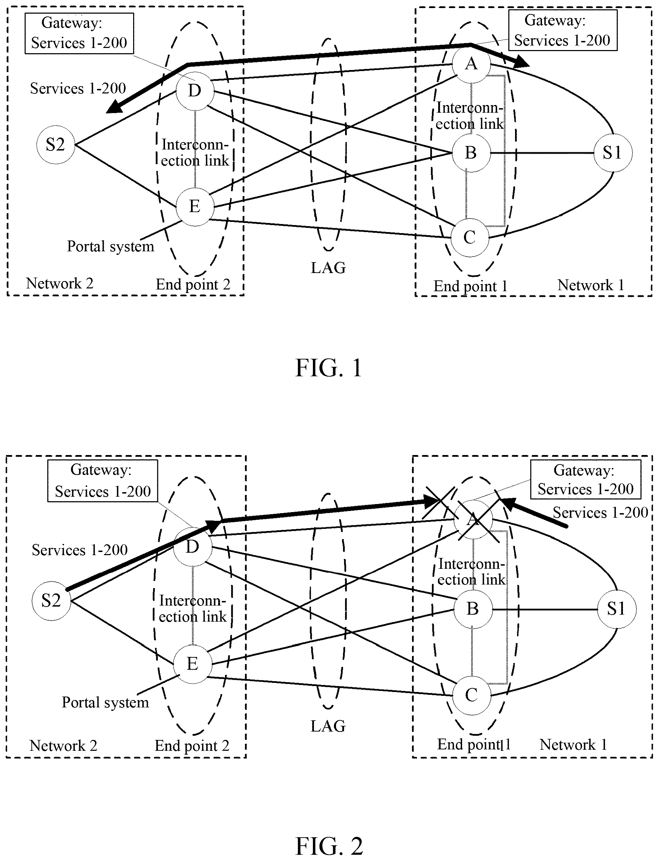

As shown in FIG. 1, the links among the portal systems A, B and C of the end point 1 in network 1 and the portal systems D and E of the end point 2 in network 2 are aggregated as one distributed aggregation group. In the network 1, the gateway of the services 1-200 is appointed in the portal system A. According to the distribution mode of the DRNI according to the service, in the network 1, the service flow of the services 1-200 is forwarded to the portal system A; because the gateway of the portal system A is the gateway of the services 1-200, then the service is sent to the network 2 through the portal system A.

However, when the portal system breaks down or the interconnection link breaks down, the portal system is caused to be removed from the aggregation group, the gateway in the portal system influenced by the fault is required to be transferred to other portal systems, otherwise, it will cause the service cutoff. As shown in FIG. 2, when the portal system A breaks down, after the service flow of the services 1-200 is sent to the portal system A, the portal system A abandons the service, and it is unable to forward the service flow to the network 1, which causes the flowrate cutoff.

It is generally adopted to set the first portal system as the portal system in which the main gateway of a certain service is located, and the second portal system as the portal system in which the backup gateway is located in the end points of the aggregation group. When the portal system in which the backup gateway is located detects that the portal system in which the main gateway is located breaks down, the backup gateway is activated as the main gateway to forward the service.

In the scheme of the related art, the problem how to switch the gateway when the portal system in which the main gateway is located is removed from the aggregation group caused by the fault of interconnection link is not considered. Meanwhile, for the situation that the end points of the distributed aggregation group are composed of at least 2 portal systems, if there is a portal system removed from the aggregation group, the main and backup gateways are required to be reappointed, otherwise, the dynamic switchover of the gateway cannot be realized.

The publication XP 011205402 discloses a method for switching a gateway of distributed resilient network interconnect comprising an end-to-end pseudowire redundancy mechanism.

### Summary of the Invention

The embodiment of the present invention provides a method and apparatus for dynamically switching a gateway of DRNI, to solve the problem that the gateway of the DRNI in the system is unable to be switched dynamically.

The embodiment of the present invention provides a method for dynamically switching a gateway of distributed resilient network interconnect (DRNI), comprising:
synchronizing information of main and backup gateways of each portal system between a portal system of a DRNI end point and other portal systems of a present end point;
the portal system detecting whether an event which triggers switching the main and backup gateways occurs or not; and
updating a gateway of a service or session when the event which triggers switching the main and backup gateways is detected, a portal system in which a new main gateway of the service or session is located starting to forward the service or session via the main gateway, and a portal system in which the backup gateway of the service or session is located stopping forwarding the service or session via the backup gateway, wherein the information of the main and backup gateways comprises: a portal system identifier, a service or session identifier, and a select algorithm or coding information of a gateway sequential list used for determining the main and backup gateways of the service or session.

Alternatively, the event comprises but not limited to one of the follows:
fault or fault recovery of a portal system of the present end point;
fault or fault recovery of an interconnection link of the portal system of the present end point; and
the portal system of the present end point being removed or joining an aggregation group.

Alternatively, the new main and backup gateways of the service or session are determined according to obtained information of the main and backup gateways.

Alternatively, synchronizing the information of the main and backup gateways of each portal system between the portal system of the DRNI end point and other portal systems of the present end point comprises:
when a system is initialized or the information of the main and backup gateways is changed, each portal system updating the information of the main and backup gateways in real time, and performing information synchronization.

Alternatively, the information of the main and backup gateways is synchronized through a way that a distributed relay control protocol (DRCP) message carries a type length value (TLV).

The embodiment of the present invention further provides an apparatus for dynamically switching a gateway of distributed resilient network interconnect (DRNI), applied in a portal system, comprising:
an information synchronization module, configured to: synchronize information of main and backup gateways of each portal system with other portal systems of a present end point;
an event detection module, configured to: detect an event which triggers switching the main and backup gateways;
a main and backup switching module, configured to: update a gateway of a service or session when the event which triggers switching the main and backup gateways is detected, and control a present portal system to start or stop forwarding the service or session via a gateway of the present portal system; and
a forwarding module, configured to: forward a service or session which takes the gateway of the present portal system as the main gateway via the gateway of the present portal system, wherein the information of the main and backup gateways comprises: a portal system identifier, a service or session identifier, and a select algorithm or coding information of a gateway sequential list used for determining the main and backup gateways of the service or session.

Alternatively, the event comprises but not limited to one of the follows:
fault or fault recovery of a portal system of the present end point;
fault or fault recovery of an interconnection link of the portal system of the present end point; and
the portal system of the present end point being removed or joining an aggregation group.

Alternatively, the new main and backup gateways of the service or session are determined according to the information of the main and backup gateways.

Alternatively, the information synchronization module is configured to: synchronize the information of the main and backup gateways of each portal system with other portal systems of the present end point in a following way:
when a system is initialized or the information of the main and backup gateways is changed, updating the information of the main and backup gateways in real time, and performing information synchronization.

Alternatively, the information of the main and backup gateways is synchronized through a way that a distributed relay control protocol (DRCP) message carries a type length value (TLV).

By adopting the method and apparatus for dynamically switching a gateway in the DRNI of the embodiment of the present invention, each portal system synchronizes the information of the main and backup gateways in real time. When the portal system in which the gateway is located breaks down or the portal system in which the gateway is located is removed from the aggregation group, there is no need to reappoint the main and backup gateways. It can just realize switching the gateway of the service or session dynamically and enable the service or the session to be transmitted from another portal system in the aggregation group.

### Brief Description of Drawings

FIG. 1 is a diagram of forwarding a service flowrate in DRNI;
FIG. 2 is a diagram of service flowrate cutoff caused by fault of a portal system in the DRNI;
FIG. 3 is a diagram of an implementation process of a method for dynamically switching a gateway of the DRNI in an embodiment of the present invention;
FIG. 4 is a TLV of gateway information defined by an embodiment of the present invention;
FIG. 5 is a TLV when the gateway information is synchronized in an embodiment of the present invention;
FIG. 6 is a diagram of module structures of an apparatus for dynamically switching a gateway of the DRNI in an embodiment of the present invention;
FIG. 7 is a diagram of switching a gateway when a portal system breaks down in application example one of the present invention;
FIG. 8 is a diagram of switching a gateway when an interconnection link breaks down in application example one of the present invention;
FIG. 9 is a diagram of switching a gateway when the fault is recovered in application example one of the present invention;
FIG. 10 is a TLV of gateway information in application example one of the present invention;
FIG. 11 is a TLV of gateway information in application example one of the present invention;
FIG. 12 is a diagram of switching a gateway when a portal system breaks down in application example two of the present invention;
FIG. 13 is a diagram of switching a gateway when an interconnection link breaks down in application example two of the present invention;
FIG. 14 is a diagram of switching a gateway when the fault is recovered in application example two of the present invention;
FIG. 15 is a TLV of gateway information in application example two of the present invention;
FIG. 16 is a TLV of gateway information in application example two of the present invention.

### Preferred Embodiments of the Present Invention

The embodiment of the present invention is described in detail with reference to the accompanying drawings hereinafter. It should be illustrated that, in the case of not conflicting, the embodiments in the present application and features in these embodiments can be combined with each other.

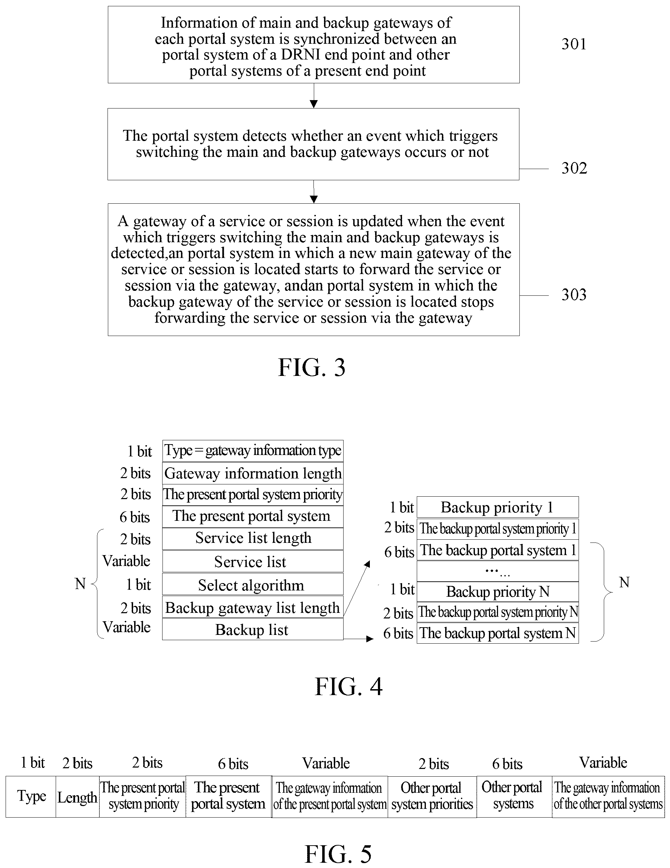

The method embodiment for dynamically switching a gateway of distributed resilient network interconnect (DRNI) in the present invention is as shown in FIG. 3 and includes the following steps.

In step 301, information synchronization is performed, and information of main and backup gateways of each portal system is synchronized between a portal system of a DRNI end point and other portal systems of a present end point.

The step 301 is performed when the system is initialized or the information of the main and backup gateways is changed.

The information of the main and backup gateways is synchronized to other portal systems of the present end point through a way that the DRCP message carries the gateway information TLV among the portal systems of the end points in the aggregation group.

The information of the main and backup gateways in the embodiment of the present invention is mainly used for enabling the portal system to be used for determining the portal system in which the main and backup gateways of the service or session are located, in order to realize the dynamic switchover smoothly. The information of the main and backup gateways includes the following information:
a portal system identifier used for distinguishing the portal systems (which can be a portal system number or address or priority, or an identifier generated by the address and priority);
a service or session identifier used for distinguishing the service or the session; and
a select algorithm or coding information of a gateway sequential list used for determining the main and backup gateways of the service or session.

After synchronizing the information of the main and backup gateways, when some portal system breaks down, then other influenced service or the session can obtain the first-selected the backup gateway of the service or the session according to the information of the main and backup gateways (the information of the main and backup gateways here may be the synchronized information of the main and backup gateways, and also may be the coding information of gateway sequential list directly configured by the system), thus performing the dynamic switchover smoothly, which will not influence the normal forwarding of service or session.

One portal system may send its gateway to all other portal systems as the information of the main and backup gateways of the main gateway, in order to realize the synchronization of its information, which also can be realized through forwarding to each other among the portal systems, to finally achieve the synchronization of the information of the main and backup gateways of all portal systems of the present end point.

It can be understood that the synchronized information of the main and backup gateways is all updated in real time.

In step 302, the detection of event is performed and the portal system detects whether an event which triggers switching the main and backup gateways occurs or not.

The event which triggers switching the main and backup gateways described in the embodiment of the present invention includes but not limited to:
fault or fault recovery of a portal system of the present end point;
fault or fault recovery of an interconnection link of the portal system of the present end point; and
the portal system of the present end point being removed or joining an aggregation group.

It can be judged whether the fault occurs through judging whether to receive the information of the other portal systems of the present end point from the interconnection link regularly, or the detection of fault can be performed through the particular detection mechanism, such as, the Connectivity Fault Management (CFM). Its detection method is not in the scope of the present invention.

In step 303, the main and backup switchover is performed, and a gateway of a service or session is updated when the event which triggers switching the main and backup gateways is detected, and a portal system in which a new main gateway of the service or session is located starts to forward the service or session via the main gateway, and a portal system in which the backup gateway of the service or session is located stops forwarding the service or session via the backup gateway.

As described in the above text, the new main and backup gateways of the service or session are determined according to obtained information of the main and backup gateways.

After determining the gateway of the portal system as the first-selected gateway of the service or session, the gateway of the present portal system is activated as the new main gateway of the service or session to forward the service or session, and the source node is notified that the gateway switchover occurs. Meanwhile, the information of the main and backup gateways of the service or session is updated, to trigger the information synchronization step 301.

It can be understood that, when the portal system in which the original main gateway is located is removed from the aggregation group, the forwarding of the service or session of the aggregation group will be stopped.

In the above-mentioned step 303, the portal system in which the new main gateway of the influenced service or session is located notifies the source node of the service or session that the gateway switchover occurs.

When the fault is recovered, for example, the fault of the portal system is recovered, the fault of the interconnection link is recovered, or the portal system joins the aggregation group again, then the recovered portal system reports the information of the main and backup gateways to the other portal systems of the present end point through the DRCP, and the main and backup switchover is performed because of detecting the event, the fault recovery, which triggers switching the main and backup gateways, and it forwards the service or session taking its own gateway as the main gateway through the present gateway, and notifies the source node of the service or session that the gateway switchover occurs

Other portal systems of the present end point receive the information of the main and backup gateways of the already recovered portal system, detecting the breakdown recovery, and obtain the service or session taking the gateway of the recovered portal system as the main gateway from the received information of the main and backup gateways. The gateway of the service or session in the present portal system is switched to the backup gateway, and the service or session is not forwarded through the present gateway. Meanwhile, the information of the main and backup gateways of the service or session is updated, and the gateway synchronization is performed.

The updated information of the main and backup gateways is announced in real time to each other among the portal systems in the DRNI end point through the DRCP control protocol. If the main gateway breaks down or the portal system in which the main gateway is located is removed, the first-selected backup gateway takes over and becomes the main gateway, and the new backup gateway is selected, and the information of the main and backup gateways is updated. If the backup gateway breaks down, then the new backup gateway is selected, and the information of the main and backup gateways is updated.

One realization mode of the information of the main and backup gateways is provided as follows, as shown in FIG. 4, and the TLV includes: a Portal System Priority field, representing the priority of the portal system.

The Portal System field is the Media Access Control (MAC) address code of the portal system. The Portal System Priority and Portal System fields are used for identifying one portal system.

The Service/Session List field represents the codes of a service or session sequence of the main gateway in the present portal system.

The Backup gateway List field represents the backup gateway list code, and the Backup Priority appoints the priority of the gateway as the backup gateway in the portal system.

The Select Algorithm field represents the service or session taking the gateway of the present portal system as the main gateway selects the method adopted by the backup gateway, and the value of the field is exampled as follows.

Select Algorithm =01, representing that it is to select the gateway of the available portal system of which the value of Backup Priority is small (that is, the priority is high) in the Backup gateway List as the first-selected gateway of the Service List when the main gateway breaks down. The method is suitable for managing or appointing the system to directly obtain the priority sequence of the backup portal system of the service or session according to the algorithm.

Select Algorithm =02, representing that it is to select the gateway of the portal system of which the value of Portal System Priority is small (that is, the portal system priority is high), except the main system, in the end points of the aggregation group as the first-selected gateway when the main gateway breaks down.

Select Algorithm =03, representing that it is to perform the average distribution on the services or sessions according to the number of backup portal systems when the main gateway breaks down, and the service or the session with the large sequence number is distributed into the system with the high portal system priority. The backup portal system is the other portal system, except the portal system in which the main gateway is located, in the present end point.

Select Algorithm =04, representing that it is to perform distribution according to a way of the services or sessions modulo the number of backup portal system when the main gateway breaks down, and the one with the large value of modulus is distributed into the portal system with the high portal system priority. The backup portal system is all other portal systems, except the portal system in which the main gateway is located, in the present end point.

Select Algorithm =05, representing that the selected gateway of the service or session and the aggregation link forwarding the service or session are in the same portal system.

### Etc.

If the backup gateway of the service or session is selected according to the Backup Priority, such as, Select Algorithm =01, then the Backup gateway List is carried in the TLV. If the backup gateway of the service or session is selected according to the Portal System Priority, such as, Select Algorithm =02\03\04, because the portal system priority can be obtained from the TLV directly after synchronizing the information of the main and backup gateways, it can be selected not to carry the Backup gateway List in the TLV.

The method of realizing gateway dynamic switchover described in the embodiment of the present invention is illustrated in detail by the combining the accompanying figures hereinafter.

### Application example one

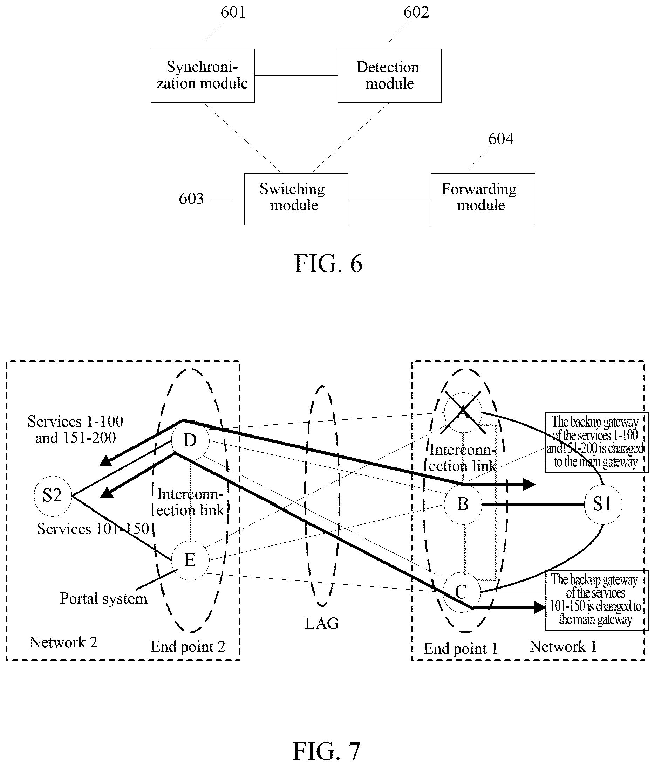

As shown in FIG. 7, the end point 1 of the aggregation group in network 1 is made up of 3 portal systems A, B and C, and the gateway of the portal system A is the gateway of the services 1-200, wherein the services 1-100 select the portal system with the high portal system priority as the portal system in which the backup gateway is located, that is, Select Algorithm =02; the services 101-200 adopt the average distribution method to select the portal system in which the backup gateway is located, that is, Select Algorithm =03. The gateway of the portal system B is the gateway of the services 201-300, and the gateway of the portal system C is the gateway of the services 301-400, the portal system with the high portal system priority is selected as the portal system in which the backup gateway is located, that is, Select Algorithm =02. The priority of the portal system A is 01, the priority of the portal system B is 02, and the priority of the portal system C is 03, that is, the priorities of the portal systems from high to low are A, B and C.

The method of realizing gateway dynamic switchover in the present application includes the following steps.

In step 701, the portal systems A, B and C announce the gateways to which they belong and the backup gateway select algorithm to each other through the DRCP control protocol.

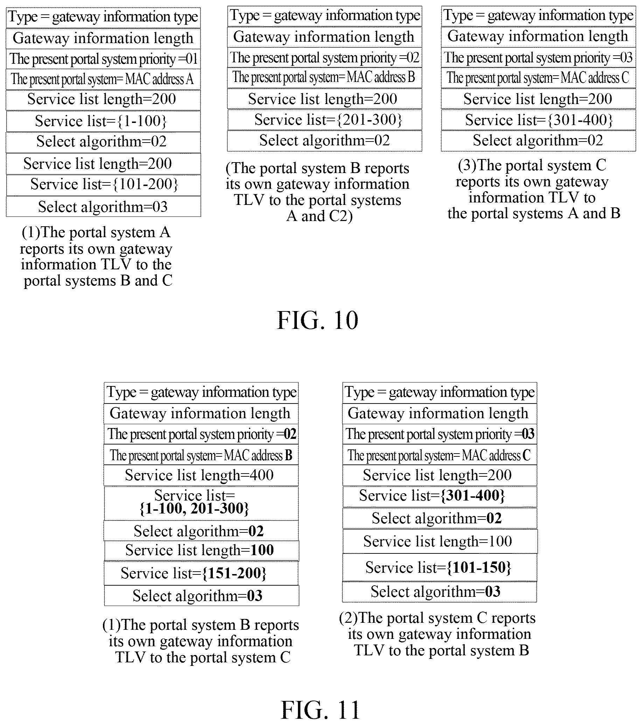

The gateway information announced among the portal systems is carried through the TLV. Wherein, the gateway information TLV announced by the portal system A to the portal systems B and C is shown as FIG. 10(1), representing that the portal system priority of the portal system A is 01; the MAC address code of the portal system is A; for the services with a service sequence being 1-100, the portal system with the high portal system priority is selected as the portal system in which the backup gateway is located; for the services, with the service sequence being 101-200, taking the gateway of the portal system A as the main gateway, the average distribution method is adopted to select the portal system in which the backup gateway is located.

The gateway information TLV announced by the portal system B to the portal system A and C is shown as FIG. 10(2), representing that the portal system priority of the portal system B is 02; the MAC address code of the portal system is B; for the services, with the service sequence being 201-300, taking the gateway of the portal system B as the main gateway, the portal system with the high portal system priority is selected as the portal system in which the backup gateway is located.

The gateway information TLV announced by the portal system C to the portal system A and B is shown as FIG. 10(3), representing that the portal system priority of the portal system C is 03; the MAC address code of the portal system is C; for the services, with the service sequence being 301-400, taking the gateway of the portal system C as the main gateway, the portal system with the high portal system priority is selected as the portal system in which the backup gateway is located.

The portal system, after receiving the gateway information of the other portal systems, carries the received gateway information of other portal systems in the TLV for the mutual announcement as well, as shown in FIG. 5, that is, including, the priority of the present portal system, the address identifier and the gateway information, and the priority, address identifier and gateway information of other portal systems, and finally the synchronization of gateway information is achieved.

After the synchronization of gateway information, the portal systems A, B and C judge that the portal system priorities from high to low are A, B and C according to the priority of each portal system obtained from the gateway information TLV. The backup gateway select algorithm (Select Algorithm =02) of the services 1-100, 201-300 and 301-400 is, except the portal system in which the main gateway is located, to select the portal system with high portal system priority as the portal system in which the backup gateway is located, therefore, it can be obtained that the backup gateways of the portal systems B, A and A are respectively B, A and A (as shown in Table 1). The backup gateway select algorithm (Select Algorithm =03) of the services 101-200 is the average distribution, and the one with the large service serial number is distributed into the portal system with the high priority, therefore, it can be obtained that the backup gateway C of the services 101-150 is the backup gateway C of the portal system C, and the backup gateway of the services 151-200 is the backup gateway B of the portal system B (as shown in Table 1).

**Table 1**

| Gateway service | Main gateway | Backup gateway |
|---|---|---|
| 1-100 | A | B |
| 101-150 | A | C |
| 151-200 | A | B |
| 201-300 | B | A |
| 301-400 | C | A |

In step 702, the portal systems A, B and C detect that the event which triggers switching the main and backup gateways occurs.

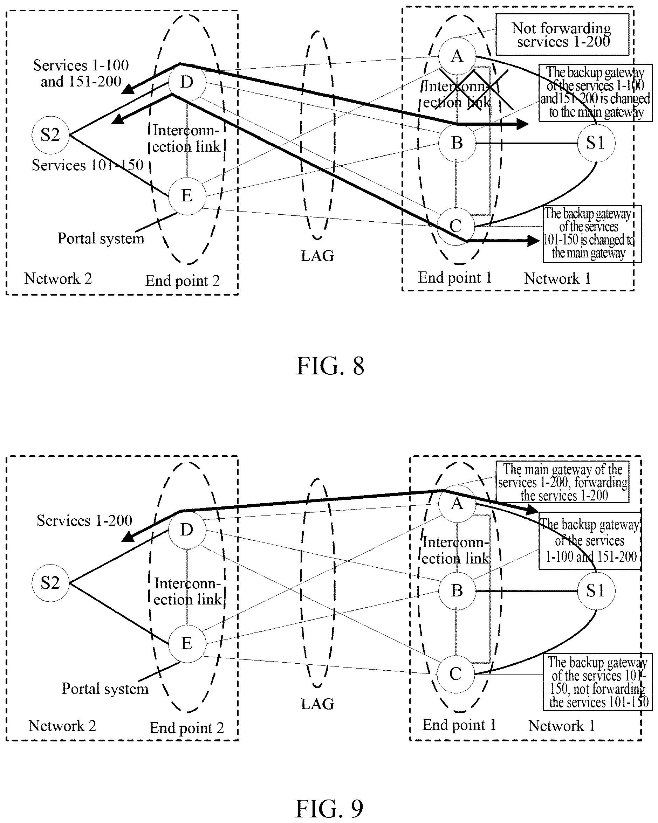

When the portal system A breaks down (as shown in FIG. 7), or the interconnection link breaks down, causing the portal system A to be isolated (as shown in FIG. 8), or the portal system A is made to be removed from the aggregation group due to the configuration reason, and the portal systems B and C are connected through the interconnection link, then it is still kept joining the aggregation group.

In step 703, the gateway of the service or session is updated, the portal system in which the new main gateway of the service or session is located starts to forward the service or session through the main gateway, and the portal system in which the backup gateway of the service or session is located stops forwarding the service or session through the backup gateway.

The portal systems B and C judge that they are not removed from the aggregation group while detecting that the connection information with the portal system A is lost, and when judging that portal system A breaks down according to the synchronized gateway information (as shown in Table 1), the gateway of the portal system B is the first-selected backup gateway of the services 1-100 and 151-200, and the gateway of the portal system C is the first-selected backup gateway of the services 101-150. That is, for the portal systems B and C, the event which triggers switching to the main gateway occurs; the portal system B activates its own gateway as the main gateway of the services 1-100 and 151-200, and the portal system C activates its own gateway as the main gateway of the services 101-150, to forward the service through the present gateway, thus not generating the flowrate cutoff. After the portal systems B and C are activated as the portal system in which the main gateway of the service influenced by the fault is located, the source node of the service in the network 1 is notified, such as, the node S1, to perform the service switchover.

The portal system is removed from the aggregation group, and the service forwarding is stopped, as shown in FIG. 8. The portal system A is removed from the aggregation group, and then forwarding the services 1-200 from the aggregation group link is stopped.

The portal systems B and C update the information of the main and backup gateways (as shown in Table 2), and perform the gateway synchronization through the DRCP, returning to step 701. If the information of the main and backup gateways sent by the portal system B to the portal system C is shown as FIG. 11(1), then it represents that the portal system priority of the portal system B is 02; the MAC address code of the portal system is B; for the services, with a service sequence being 1-100 and 201-300, taking the gateway of the portal system B as the main gateway, the portal system with the high portal system priority is selected as the portal system in which the backup gateway is located; for the services, with the service sequence being 151-200, taking the gateway of the portal system B as the main gateway, the average distribution method is used to select the portal system in which the backup gateway is located.

The information of the main and backup gateways sent by the portal system C to the portal system B is shown as is shown as FIG. 11(2), representing that the portal system priority of the portal system C is 03; the MAC address code of the portal system is C; for the services, with the service sequence being 301-400, taking the gateway of the portal system C as the main gateway, the portal system with the high portal system priority is selected as the portal system in which the backup gateway is located. For the services, with the service sequence being 101-150, taking the gateway of the portal system C as the main gateway, the average distribution method is used to select the portal system in which the backup gateway is located.

After the synchronization of gateway information, the portal systems B and C can obtain the main and backup gateway information of the service, as shown in Table 2.

**Table 2**

| Gateway service | Main gateway | Backup gateway |
|---|---|---|
| 1-100 | B (backup changed to main) | C |
| 101-150 | C (backup changed to main) | B |
| 151-200 | B (backup changed to master) | C |
| 201-300 | B | C |
| 301-400 | C | B |

In addition, after the fault of the portal system A is recovered, as shown in FIG. 9, the portal system A announces its own gateway information and the backup gateway select algorithm to the portal systems B and C through the DRCP, and the announced gateway information TLV is as shown in FIG. 10(1). Meanwhile, the services 1-200 are forwarded through the present gateway, and the source node S1 of the service is notified that the gateway switchover occurs.

The portal system B detects that the portal system A is recovered, and judges that the portal system A is the portal system in which the main gateway of the services 1-100 and 151-200 is located from the gateway information announced by the portal system A, therefore, the gateway of the portal system B is updated as the backup gateway of the services 1-100 and 151-200, and the service is not forwarded through the present gateway. Meanwhile, the gateway information is updated, and its own gateway information is announced to the portal systems A and C, which is the same as shown in FIG. 10(2). The portal system C detects that the portal system A is recovered, and the processing mode is the same with the portal system B, it will also update its own gateway as the backup gateway of the services 101-150, and it will not forward the service through the present gateway. The gateway information TLV that the portal system C announces to the portal systems A and B is the same as shown in FIG. 10(3).

### Application example two

The difference between the application example one and the application example two is, in the present embodiment, the backup gateway select algorithm announced among the portal systems can be the coding information of priority sequential list of the backup portal system through the configuration or according to the algorithm. The gateway of the available portal system of which the value of Backup Priority is small (that is, the backup priority is high) in the Backup gateway List is selected as the first-selected gateway of the Service List when the main gateway breaks down.

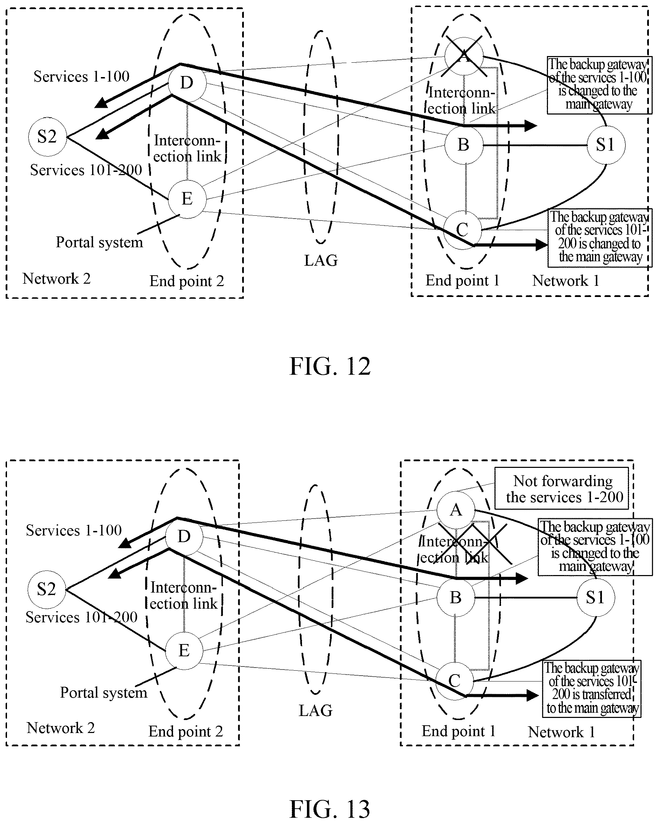

As shown in FIG. 12, the end point 1 of the aggregation group in network 1 is made up of 3 portal systems A, B and C, and the portal system A is the gateway of the services 1-200, wherein the backup gateway priority sequence of the services 1-100 is the portal systems B and C, and the backup gateway priority sequence of the services 101-200 is the portal systems C and B. The portal system B is the gateway of the services 201-300, and the backup gateway priority sequence is the portal systems C and A. The portal system C is the gateway of the services 301-400, and the backup gateway priority sequence is the portal systems A and B.

The method of realizing gateway dynamic switchover in the present application includes the following steps.

In step 1201, the portal systems A, B and C announce the gateways to which they belong and the backup gateway information to each other through the DRCP control protocol.

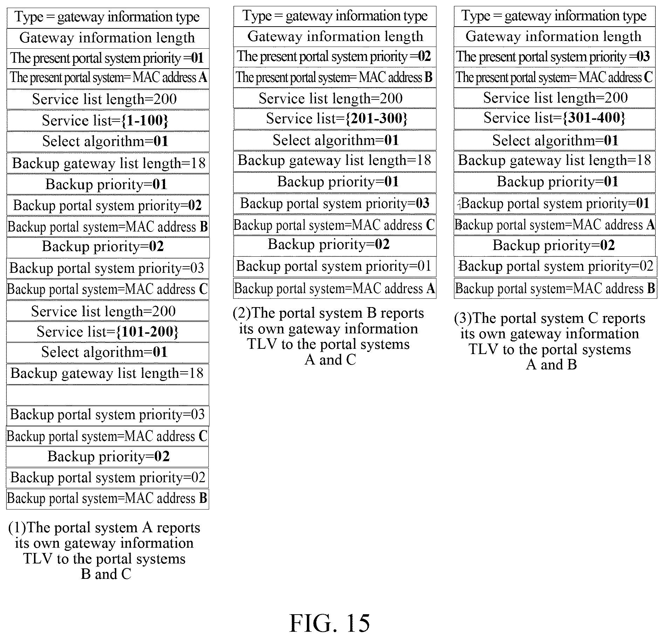

The information of main and backup gateways announced among the portal systems can be carried in the protocol through the TLV. Wherein, the gateway information TLV announced by the portal system A to the portal systems B and C is shown as FIG. 15(1), representing that the portal system priority of the portal system A is 01; the MAC address code of the portal system is A; for the services, with the service sequence being 1-100, taking the gateway of the portal system A as the main gateway, the portal system with the high backup priority is selected as the portal system in which the backup gateway is located; wherein for the backup portal system of which the backup priority is 01, its portal system priority is 02, and the MAC address code of the portal system is B; for the backup portal system of which the backup priority is 02, its portal system priority is 03, and the MAC address code of the portal system is C; for the services, with the service sequence being 101-200, taking the gateway of the portal system A as the main gateway, the portal system with the high backup priority is selected as the portal system in which the backup gateway is located; wherein for the backup portal system of which the backup priority is 01, its portal system priority is 03, and the MAC address code of the portal system is C; for the backup portal system of which the backup priority is 02, its portal system priority is 02, and the MAC address code of the portal system is B.

The gateway information TLV announced by the portal system B to the portal system A and C is shown as FIG. 15(2), representing that the portal system priority of the portal system A is 02; the MAC address code of the portal system is B; for the services, with the service sequence being 201-300, taking the gateway of the portal system B as the main gateway, the portal system with the high backup priority is selected as the portal system in which the backup gateway is located; wherein, for the backup portal system of which the backup priority is 01, its portal system priority is 03, and the MAC address code of the portal system is C; for the backup portal system of which the backup priority is 02, its portal system priority is 01, and the MAC address code of the portal system is A.

The gateway information TLV announced by the portal system C to the portal system A and B is shown as FIG. 15(3), representing that the portal system priority of the portal system C is 03; the MAC address code of the portal system is C; for the services, with the service sequence being 301-400, taking the gateway of the portal system C as the main gateway, the available portal system with the high backup priority is selected as the portal system in which the backup gateway is located; wherein, for the backup portal system of which the backup priority is 01, its portal system priority is 01, and the MAC address code of the portal system is A; for the backup portal system of which the backup priority is 02, its portal system priority is 02, and the MAC address code of the portal system is B.

The portal system, after receiving the gateway information of other portal systems, carries the received gateway information of other portal systems in the TLV for the mutual announcement as well, as shown in FIG. 5, and finally the synchronization of gateway information is achieved.

After the synchronization of gateway information, the portal systems A, B and C can obtain the information of main and backup gateways of the service, as shown in Table 3.

**Table 3**

| Gateway service | Main gateway | Select algorithm | Backup gateway sequence (ranking as per the backup priority) |
|---|---|---|---|
| 1-100 | A | 01 | B, C |
| 101-200 | A | 01 | C, B |
| 201-300 | B | 01 | C, A |
| 301-400 | C | 01 | A, B |

In step 1202, the portal systems A, B and C detect that the event which triggers switching the main and backup gateways occurs.

When the portal system A breaks down (as shown in FIG. 12), or the interconnection link breaks down, causing the portal system A to be isolated (as shown in FIG. 13), or the portal system A is made to be removed from the aggregation group due to the configuration reason, and the portal systems B and C are connected through the interconnection link, then it is still kept joining the aggregation group. The portal system of the present end point is required to judge whether itself is removed from the aggregation group; if yes, then step 1201 is entered; if no, then step 1203 is entered.

In step 1203, the gateway of the service or session is updated, the portal system in which the new main gateway of the service or session is located starts to forward the service or session through the main gateway, and the portal system in which the backup gateway of the service or session is located stops forwarding the service or session through the backup gateway.

The portal systems B and C judge that they are not removed from the aggregation group while detecting that the connection information with the portal system A is lost, and the portal system with the high backup priority in the backup gateway sequence is selected as the portal system in which the first-selected gateway is located according to the gateway select algorithm of the services 1-100 and 101-200 (Select Algorithm = 01). Therefore, it can be judged from Table 3 that the gateway of the portal system B is the first-selected backup gateway of the services 1-100, and the gateway of the portal system C is the first-selected backup gateway of the services 101-200. That is, as to the portal systems B and C, the event which triggers switching to the main gateway occurs; the portal system B activates its own gateway as the main gateway of the services 1-100, and the portal system C activates its own gateway as the main gateway of the services 101-200, to forward the service through the present gateway, thus not generating the flowrate cutoff.

After the portal systems B and C activates their own gateways as the main gateways of the services influenced by the fault, the source node of the service in the network 1 is notified, such as, the node S1, to perform the service switchover.

The portal system is removed from the aggregation group, and forwarding the service of the aggregation group is stopped, as shown in FIG. 13. The portal system A is removed from the aggregation group, and then forwarding the services 1-200 from the aggregation group link is stopped.

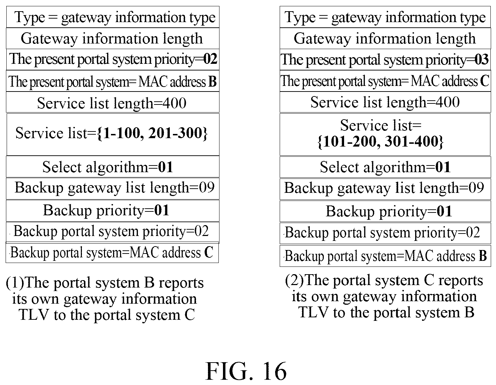

The portal systems B and C update the information of the main and backup gateways (as shown in Table 4), and perform the synchronization of gateway information through the DRCP, returning to step 1201. If the gateway information TLV sent by the portal system B to the portal system C is shown as FIG. 16(1), then it represents that the portal system priority of the portal system B is 02; the MAC address code of the portal system is B; for the services, with a service sequence being 1-100 and 201-300, taking the gateway of the portal system B as the main gateway, the portal system with the high backup priority is selected as the portal system in which the backup gateway is located; wherein, for the backup portal system of which the backup priority is 01, its portal system priority is 03, and the MAC address code of the portal system is C. The gateway information TLV sent by the portal system C to the portal system B is shown as is shown as FIG. 16(2), representing that the portal system priority of the portal system C is 03; the MAC address code of the portal system is C; for the services, with the service sequence being 101-200 and 301-400, taking the gateway of the portal system C as the main gateway, the portal system with the high backup priority is selected as the portal system in which the backup gateway is located. Wherein, for the backup portal system of which the backup priority is 01, its portal system priority is 02, and the MAC address code of the portal system is B.

After the synchronization of gateway information, the portal systems B and C can obtain the new main and backup gateway information of the service, as shown in Table 4.

**Table 4**

| Gateway service | Main gateway | Backup gateway (ranking as per the backup priority) |
|---|---|---|
| 1-100 | B (backup changed to main) | C |
| 101-200 | C (backup changed to main) | B |
| 201-300 | B | C |
| 301-400 | C | B |

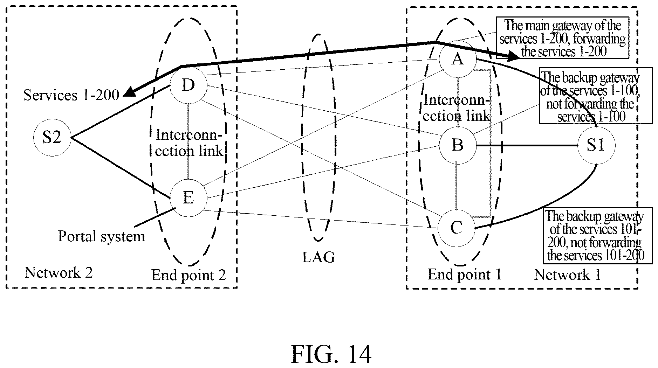

In addition, when the portal system A is recovered, as shown in FIG. 14, the portal system A announces its own gateway information and the backup gateway select algorithm to the portal systems B and C through the DRCP, and the announced gateway information TLV is as shown in FIG. 15(1). Meanwhile, the services 1-200 are forwarded through the present gateway, and the source node S1 of the service is notified that the gateway switchover occurs.

The portal system B detects that the portal system A is recovered, and judges that the portal system A is the portal system in which the main gateway of the services 1-100 is located, therefore, the gateway of the portal system B is updated as the backup gateway of the services 1-100, and the service is not forwarded through the present gateway. Meanwhile, the gateway information is updated by the portal system B, and its own gateway information is announced to the portal systems A and C, which is same as shown in FIG. 15(2). The portal system C detects that the portal system A is recovered, and the processing mode is same with the portal system B, it will also update its own gateway as the backup gateway of the services 101-200, and it will not forward the service through the present gateway. The own gateway information TLV that the portal system C announces to the portal systems A and B is the same as shown in FIG. 15(3).

In order to realize the above-mentioned method, the embodiment of the present invention further provides an apparatus for dynamically switching a gateway of distributed resilient network interconnect (DRNI), as shown in FIG. 6, including an information synchronization module 601, an event detection module 602, a main and backup switching module 603 and a forwarding module 604, to complete the above-mentioned function.

The information synchronization module 601 is configured to: synchronize information of main and backup gateways of each portal system with other portal systems of a present end point.

The information synchronization module, when a system is initialized or the information of the main and backup gateways is changed, updates the information of the main and backup gateways in real time, and performs the information synchronization.

The event detection module 602 is configured to: detect an event which triggers switching the main and backup gateways.

The event includes:
fault or fault recovery of a portal system of the present end point;
fault or fault recovery of an interconnection link of the portal system of the present end point; and
the portal system of the present end point being removed or joining an aggregation group.

As described in the above text, the information of the main and backup gateways includes the following information: a portal system identifier used for distinguishing the portal systems (which can be a portal system number or address or priority, or an identifier generated by the address and priority); a service or session identifier used for distinguishing the service or the session; and a select algorithm or coding information of gateway sequential list used for determining the main and backup gateways of the service or session.

The main and backup switching module 603 is configured to: update a gateway of a service or session when the event which triggers switching the main and backup gateways is detected, and control a present portal system to start or stop forwarding the service or session via the present portal system.

When the new main gateway of the service is in the present portal system, the main and backup switchover module 603 is further used for notifying the source node of the service or session that the gateway switchover occurs.

The new main and backup gateways of the service or session are determined according to the information of the main and backup gateways.

The forwarding module 604 is configured to: forward a service or session which takes the gateway of the present portal system as the main gateway via the gateway of the present portal system.

The above description is only the preferred embodiments of the present invention and is not intended to limit the present invention. For those skilled in the art, the embodiment of the present invention can have various modifications and variations. All of modifications, equivalents and/or improvements without departing from the spirit and essence of the present invention should be embodied in the protection scope of the appended claims of the present invention.

By adopting the method and apparatus for dynamically switching a gateway in the DRNI of the embodiment of the present invention, each portal system synchronizes the information of the main and backup gateways in real time. When the portal system in which the gateway is located breaks down or the portal system in which the gateway is located is removed from the aggregation group, there is no need to reappoint the main and backup gateways. It can just realize switching the gateway of the service or session dynamically and enable the service or the session to be transmitted from another portal system in the aggregation group.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limited to any specific form of the combination of the hardware and software.

### Industrial Applicability

By adopting the method and apparatus of the embodiment of the present invention, it can realize switching the gateway of the service or session dynamically and enable the service or the session to be transmitted from another portal system in the aggregation group.

## Claims

1. A method for dynamically switching a gateway of distributed resilient network interconnect comprising:
synchronizing (301) information of main and backup gateways of each portal system between a portal system of a DRNI end point and other portal systems of a present end point;
the portal system detecting (302) whether an event which triggers switching the main and backup gateways occurs or not; and
updating (303) a gateway of a service or session according to the information of main and backup gateways when the event which triggers switching the main and backup gateways is detected, that is, a portal system in which a new main gateway of the service or session is located starting to forward the service or session via the main gateway, and a portal system in which a backup gateway of the service or session is located stopping forwarding the service or session via the backup gateway;
wherein the information of the main and backup gateways comprises: a portal system identifier, a service or session identifier, and a select algorithm or coding information of a gateway sequential list used for determining the main and backup gateways of the service or session.

2. The method according to claim 1, wherein the event comprises one of the follows:
fault or fault recovery of a portal system of the present end point;
fault or fault recovery of an interconnection link of the portal system of the present end point; and
the portal system of the present end point being removed or joining an aggregation group.

3. The method according to claim 1, wherein:
new main and backup gateways of the service or session are determined according to obtained information of the main and backup gateways.

4. The method according to claim 1, wherein:
synchronizing the information of the main and backup gateways of each portal system between the portal system of the DRNI end point and other portal systems of the present end point comprises:
when a system is initialized or the information of the main and backup gateways is changed, each portal system updating the information of the main and backup gateways in real time, and performing information synchronization.

5. The method according to claim 1, wherein:
the information of the main and backup gateways is synchronized through a way that a distributed relay control protocol message carries a type length value TLV.

6. An apparatus for dynamically switching a gateway of distributed resilient network interconnect DRNI, which is applied to a portal system, comprising:
an information synchronization module, (601) configured to: synchronize information of main and backup gateways of each portal system with other portal systems of a present end point;
an event detection module, (602) configured to: detect an event which triggers switching the main and backup gateways;
a main and backup switching module, (603) configured to: update a gateway of a service or session when the event which triggers switching the main and backup gateways is detected, and control a present portal system to start or stop forwarding the service or session via a gateway of the present portal system; and
a forwarding module, (604) configured to: forward a service or session which takes the gateway of the present portal system as the main gateway via the gateway of the present portal system;
wherein the information of the main and backup gateways comprises: a portal system identifier, a service or session identifier, and a select algorithm or coding information of a gateway sequential list used for determining main and backup gateways of the service or session.

7. The apparatus according to claim 6, wherein the event comprises one of the follows:
fault or fault recovery of a portal system of the present end point;
fault or fault recovery of an interconnection link of the portal system of the present end point; and
the portal system of the present end point being removed or joining an aggregation group.

8. The apparatus according to claim 6, wherein:
new main and backup gateways of the service or session are determined according to the information of the main and backup gateways.

9. The apparatus according to claim 6, wherein:
the information synchronization module is configured to: synchronize the information of the main and backup gateways of each portal system with other portal systems of the present end point by the following mode:
when a system is initialized or the information of the main and backup gateways is changed, updating the information of the main and backup gateways in real time, and performing information synchronization.

10. The apparatus according to claim 6, wherein:
the information of the main and backup gateways is synchronized through a way that a distributed relay control protocol DRCP message carries a type length value TLV.

## Patentansprüche

1. Ein Verfahren zur dynamischen Gateway-Umschaltung einer verteilten robusten Netzwerkverbindung, das Folgendes umfasst:
Synchronisieren (301) von Informationen von Haupt- und Sicherungs-Gateways jedes Portalsystems zwischen einem Portalsystem eines DRNI-Endpunkts und anderen Portalsystemen eines vorhandenen Endpunkts;
das Erfassen (302), durch das Portalsystem, ob ein Ereignis, das das Schalten der Haupt- und Sicherungs-Gateways auslöst, stattfindet oder nicht; und
Aktualisieren (303) eines Gateways eines Dienstes oder einer Sitzung entsprechend den Informationen der Haupt- und Sicherungs-Gateways, wenn das Ereignis, das das Schalten der Haupt- und Sicherungs-Gateways auslöst, erfasst wird; das heißt, das Beginnen der Weiterleitung des Dienstes oder der Sitzung über ein Haupt-Gateway durch ein Portalsystem, in dem sich das neue Haupt-Gateway des Dienstes oder der Sitzung befindet; und das Anhalten der Weiterleitung des Dienstes oder der Sitzung über ein Sicherungs-Gateway durch ein Portalsystem, in dem sich das Sicherungs-Gateway des Dienstes oder der Sitzung befindet;
wobei die Informationen der Haupt- und Sicherungs-Gateways Folgendes umfassen: eine Portalsystem-Kennung, eine Dienste- oder Sitzungs-Kennung und einen Auswahlalgorithmus oder Codierinformationen einer sequentiellen Gateway-Liste, die verwendet wird, um die Haupt- und Sicherungs-Gateways des Dienstes oder der Sitzung zu bestimmen.

2. Das Verfahren gemäß Anspruch 1, wobei das Ereignis eines von Folgendem umfasst:
Fehler oder Fehlerbeseitigung eines Portalsystems des vorhandenen Endpunkts;
Fehler oder Fehlerbeseitigung einer Zusammenschaltungsverbindung des Portalsystems des vorhandenen Endpunkts; und
das Entfernen des Portalsystems des vorhandenen Endpunkts oder sein Hinzufügen zu einer Aggregationsgruppe.

3. Das Verfahren gemäß Anspruch 1, worin
neue Haupt- und Sicherungs-Gateways des Dienstes oder der Sitzung entsprechend gewonnenen Informationen über die Haupt- und Sicherungs-Gateways bestimmt werden.

4. Das Verfahren gemäß Anspruch 1, worin
das Synchronisieren der Informationen der Haupt- und Sicherungs-Gateways jedes Portalsystems zwischen dem Portalsystem des DRNI-Endpunkts und anderen Portalsystemen der vorhandenen Endpunkts Folgendes umfasst:
wenn ein System initialisiert wird oder die Informationen der Haupt- und Sicherungs-Gateways verändert werden, das Aktualisieren der Informationen der Haupt- und Sicherungs-Gateways in Echtzeit durch jedes Portalsystem und das Durchführen von Informationssynchronisation.

5. Das Verfahren gemäß Anspruch 1, worin
die Informationen der Haupt- und Sicherungs-Gateways durch einen Weg synchronisiert werden, dass eine verteilte Relaissteuerungs-Protokollnachricht einen Typ-Länge-Wert (Type Length Value, TLV) enthält.

6. Eine Vorrichtung zum dynamischen Schalten eines Gateways von Distributed Resilient Network Interconnect DRNI, die bei einem Portalsystem angewandt wird, Folgendes umfassend:
ein Informationssynchronisationsmodul (601), konfiguriert, um: Informationen von Haupt- und Sicherungs-Gateways jedes Portalsystems mit anderen Portalsystemen eines vorhandenen Endpunkts zu synchronisieren;
ein Ereigniserfassungsmodul (602), konfiguriert, um: ein Ereignis zu erfassen, das das Schalten der Haupt- und Sicherungs-Gateways auslöst;
ein Haupt- und Sicherungs-Koppelmodul (603), konfiguriert, um: ein Gateway eines Dienstes oder einer Sitzung zu aktualisieren, wenn das Ereignis, das das Schalten der Haupt-und Sicherungs-Gateways auslöst, erfasst wird, und ein vorhandenes Portalsystem zu steuern, um das Weiterleiten des Dienstes oder der Sitzung über ein Gateway des vorhandenen Portalsystems zu starten oder anzuhalten; und
ein Weiterleitungsmodul (604), konfiguriert, um: einen Dienst oder eine Sitzung, die das Gateway des vorhandenen Portalsystems als Haupt-Gateway nimmt, über das Gateway des vorhandenen Portalsystems weiterzuleiten;
wobei die Informationen der Haupt- und Sicherungs-Gateways Folgendes umfassen: eine Portalsystem-Kennung, eine Dienste-oder Sitzungs-Kennung und einen Auswahlalgorithmus oder Codierinformationen einer sequentiellen Gateway-Liste, die verwendet wird, um die Haupt- und Sicherungs-Gateways des Dienstes oder der Sitzung zu bestimmen.

7. Die Vorrichtung gemäß Anspruch 6, wobei das Ereignis eines von Folgendem umfasst:
Fehler oder Fehlerbeseitigung eines Portalsystems des vorhandenen Endpunkts;
Fehler oder Fehlerbeseitigung einer Zusammenschaltungsverbindung des Portalsystems des vorhandenen Endpunkts; und
das Entfernen des Portalsystems des vorhandenen Endpunkts oder sein Hinzufügen zu einer Aggregationsgruppe.

8. Die Vorrichtung gemäß Anspruch 6, wobei
neue Haupt- und Sicherungs-Gateways des Dienstes oder der Sitzung entsprechend den Informationen der Haupt- und Sicherungs-Gateways bestimmt werden.

9. Die Vorrichtung gemäß Anspruch 6, wobei
das Informationssynchronisationsmodul konfiguriert ist, um: die Informationen der Haupt- und Sicherungs-Gateways jedes Portalsystems mit anderen Portalsystemen des vorhandenen Endpunkts auf folgende Art und Weise zu synchronisieren:
wenn ein System initialisiert wird oder die Informationen der Haupt- und Sicherungs-Gateways verändert werden, Aktualisierung der Haupt- und Sicherungs-Gateways in Echtzeit und Durchführung von Informationssynchronisation.

10. Die Vorrichtung gemäß Anspruch 6, wobei die Informationen der Haupt- und Sicherungs-Gateways durch einen Weg synchronisiert werden, dass eine verteilte Relaissteuerungs-Protokoll- (Distributed Relay Control Protocol-, DRCP-) Nachricht einen Typ-Länge-Wert (Type Length Value, TLV) enthält.

## Revendications

1. Procédé de commutation dynamique d'une passerelle d'interconnexion de réseau résilient distribué comprenant :
de synchroniser (301) l'information de passerelles principale et de secours de chaque système de portail entre un système de portail d'un point d'extrémité de DRNI et d'autres systèmes de portail d'un point d'extrémité présent ;
le système de portail détectant (302) si un évènement qui déclenche la commutation des passerelles principale et de secours a eu lieu ou non ; et
mettre à jour (303) une passerelle d'un service ou d'une session selon l'information des passerelles principale et de secours quand l'évènement qui déclenche la commutation des passerelles principale et de secours est détecté, c'est à dire, un système de portail dans lequel une nouvelle passerelle principale du service ou de la session est située commençant à transférer le service ou la session via la passerelle principale, et un système de portail dans lequel une passerelle de secours du service ou de la session est située arrêtant de transférer le service ou la session via la passerelle de secours ;
dans lequel l'information des passerelles principale et de secours comprend : un identificateur de système de portail, un identificateur de service ou de session, et un algorithme de sélection ou une information de codage d'une liste séquentielle de passerelles utilisée pour déterminer les passerelles principale et de secours du service ou de la session.

2. Procédé selon la revendication 1, dans lequel l'évènement comprend l'un de ce qui suit :
erreur ou correction d'erreur d'un système de portail du présent point d'extrémité ;
erreur ou correction d'erreur d'un lien d'interconnexion du système de portail du présent point d'extrémité ; et
le système de portail du présent point d'extrémité étant enlevé de ou rejoignant un groupe d'agrégation.

3. Procédé selon la revendication 1, dans lequel :
de nouvelles passerelles principale et de secours du service ou de la session sont déterminées selon une information obtenue des passerelles principale et de secours.

4. Procédé selon la revendication 1, dans lequel :
synchroniser l'information des passerelles principale et de secours de chaque système de portail entre le système de portail du point d'extrémité de DRNI et d'autres systèmes de portail du présent point d'extrémité comprend :
quand un système est initialisé ou l'information des passerelles principale et de secours est changée, chaque système de portail mettant à jour l'information des passerelles principale et de secours en temps réel, et réalisant une synchronisation d'information.

5. Procédé selon la revendication 1, dans lequel :
l'information des passerelles principale et de secours est synchronisée au moyen qu'un message de protocole de commande à relai distribué supporte un type-longueur-valeur TLV.

6. Dispositif de communication dynamique d'une passerelle d'interconnexion de réseau résilient distribué DRNI qui est appliqué à un système de portail, comprenant :
un module de synchronisation d'information (601) configuré pour : synchroniser une information des passerelles principale et de secours de chaque système de portail avec d'autres systèmes de portails d'un présent point d'extrémité ;
un module de détection d'évènement (602) configuré pour :
détecter un évènement qui déclenche la commutation des passerelles principale et de secours ;
un module de commutation principal et de secours (603) configuré pour : mettre à jour une passerelle d'un service ou d'une session quand l'évènement qui déclenche la commutation des passerelles principale et de secours est détecté, et commander un système de portail présent pour commencer ou arrêter de transférer le service ou la session via une passerelle du système de portail présent ; et
un module de transfert (604) configuré pour : transférer un service ou une session qui prend la passerelle du présent système de portail comme la passerelle principale via la passerelle du présent système de portail ;
dans lequel l'information des passerelles principale et de secours comprend : un identificateur de système de portail, un identificateur de service ou de session, et un algorithme de sélection ou une information de codage d'une liste séquentielle de passerelles utilisée pour déterminer les passerelles principale et de secours backup du service ou de la session.

7. Dispositif selon la revendication 6, dans lequel l'évènement comprend l'un de ce qui suit :
erreur ou correction d'erreur d'un système de portail du présent point d'extrémité ;
erreur ou correction d'erreur d'un lien d'interconnexion du système de portail du présent point d'extrémité ; et
le système de portail du présent point d'extrémité étant enlevé de ou rejoignant un groupe d'agrégation.

8. Dispositif selon la revendication 6, dans lequel :
de nouvelles passerelles principale et de secours du service ou de la session sont déterminées selon une information obtenue des passerelles principale et de secours.

9. Dispositif selon la revendication 6, dans lequel :
le module de synchronisation d'information est configuré pour :
synchroniser l'information des passerelles principale et de secours de chaque système de portail avec d'autres systèmes de portail du présent point d'extrémité par le mode suivant :
quand un système est initialisé ou l'information des passerelles principale et de secours est changée, mettre à jour l'information des passerelles principale et de secours en temps réel, et réaliser une synchronisation d'information.

10. Dispositif selon la revendication 6, dans lequel :
l'information des passerelles principale et de secours est synchronisée de telle manière qu'un message de protocole de commande à relai distribué DRCP supporte un type-longueur-valeur TLV.
